# NEUE EUROPÄISCHE PATENTSCHRIFT

(11) **EP 1 151 363 B2**
(45) Veröffentlichungstag und Bekanntmachung des Hinweises auf die Entscheidung über den Einspruch: **06.10.2010**
(45) Hinweis auf die Patenterteilung: 08.10.2003
(21) Anmeldenummer: 00901139.6
(22) Anmeldetag: 29.01.2000
(51) Int. Cl.: G05D 16/20

(54) **PROPORTIONAL-DRUCKREGELVENTIL**
PROPORTIONAL PRESSURE CONTROL VALVE
SOUPAPE PROPORTIONNELLE DE REGULATION DE LA PRESSION

(30) Priorität: 06.02.1999 DE 19904902
(43) Veröffentlichungstag der Anmeldung: 07.11.2001
(73) Patentinhaber: ZF FRIEDRICHSHAFEN Aktiengesellschaft, 88038 Friedrichshafen (DE)
(72) Erfinder: MAYR, Karlheinz, D-88142 Wasserburg (DE); EISELE, Markus, D-88250 Weingarten (DE); KILL, Walter, D-88046 Friedrichshafen (DE); WEBER, Michael, D-88289 Waldburg (DE); REMMLINGER, Hubert, D-88046 Friedrichshafen (DE); FISCHER, Jochen, D-88046 Friedrichshafen (DE)
(86) Internationale Anmeldenummer: PCT/EP2000/000717
(87) Internationale Veröffentlichungsnummer: WO 2000/046647

(56) Entgegenhaltungen:
- DE-A- 4 122 259
- FR-A- 2 502 385
- US-A- 5 547 165

## Beschreibung

Die Erfindung betrifft ein Proportional-Druckregelventil mit einer Druckreduzier- und einer Druckhaltefunktion. Das Ventil besteht im wesentlichen aus einem Ventilgehäuse mit Zu- und Ablauföffnungen, einem Steuerelement zum Öffnen und Schließen von Drosselspalten, einer Ankerstange mit einer Ankerachse zur Verbindung des Steuerelements mit einem Proportional-Magnet, welcher ein Bestandteil des Proportional-Druckregelventils ist und aus einem Magnetkern, einem Magnetanker und einer Magnetspule besteht. Der Magnetanker ist durch die Magnetkraft in Richtung der Ankerachse zwischen zwei Endpositionen hin- und herbewegbar, wobei die erste Endposition einer Halteposition des Magnetankers entspricht, d. h., dass der Magnetanker das Steuerelement in dieser Position festhält.

Ventile der oben genannten Bauart sind aus dem Stand der Technik beispielsweise aus der US 5,547,165 A bekannt; sie werden beispielsweise als Direktsteuerventile zum Ansteuern von Kupplungen in automatischen Kraftfahrzeug-Schaltgetrieben verwendet. In derartigen Getrieben beträgt der hydraulische Hauptdruck, oder auch Systemdruck genannt, beispielsweise in Nutzkraftfahrzeuggetrieben ca. 24 bar. Dieser Hauptdruck wird üblicherweise durch ein Druckreduzierventil auf einen Vorsteuerdruck reduziert, mit welchem auch das Proportional-Druckregelventil beaufschlagt wird. Um beispielsweise nach dem Einkuppeln einer Kupplung diese auch geschlossen zu halten, wird gewöhnlich ein Sicherheitsüberdruck, welcher in etwa dem Systemdruck entspricht, an dem Kupplungszylinder angelegt und beispielsweise durch zusätzliche Halteventile aufrechterhalten. Somit werden bis zu drei Ventile, nämlich ein Proportional-Druckregelventil, ein Druckreduzierventil und ein Druckhalteventil, zum Betrieb, beispielsweise einer Kupplung in einem Automatgetriebe, benötigt.

Es ist außerdem bekannt, dass ein Proportional-Magnet in seinem Arbeitsbereich eine nahezu waagerechte Kraft-Hub-Kennlinie aufweist und die Magnetkraft in einem Bereich unterhalb eines bestimmten Hubes, d. h. eines Abstandes zwischen Magnetanker und Magnetkern, gegenüber der Magnetkraft im Arbeitsbereich sprunghaft ansteigt. Zum Stand der Technik siehe auch Mannesmann-Rexroth, Fluidtechnik von A bis Z, Der Hydraulik Trainer, Bd. 5, 04.95, Seite 266. So ist in der Halteposition des Magnetankers der kleinste axiale Abstand zwischen den beiden gegenüber angeordneten Stirnseiten des Magnetankers und des Magnetkerns derart bemessen, dass die magnetische Haltekraft zwischen dem Magnetanker und dem Magnetkern in dieser Halteposition größer ist als die Magnetkraft im Arbeitsbereich des Proportional-Magneten und dass der Magnetanker durch die überhöhte magnetische Haltekraft in dieser Halteposition feststellbar ist.

Ein Proportional-Druckregelventil mit sämtlichen Merkmalen des Oberbegriffs von Anspruch 1 ist aus der WO 98/44266 bekannt.

Aufgabe der vorliegenden Erfindung ist es, ein Ventil anzugeben, welches die oben genannten Funktionen erfüllt und dabei einen einfacheren Aufbau, beispielsweise durch weniger Bauteile, aufweist und somit kostengünstiger herstellbar ist.

Erfindungsgemäß wird diese Aufgabe dadurch gelöst, dass bei einem Proportional-Druckregelventil der vorgenannten Bauart das Steuerelement drei Steuerkanten bzw. Steuerflächen aufweist. Dabei ist das Steuerelement als Doppelkolben mit zwei Schieberkanten und einem weiteren Dichtsitz ausgebildet, dessen Dichtfläche sich in radialer Richtung bezüglich der Längsachse des Steuerelements erstreckt. Damit kann auf einfache Weise eine kostengünstige Ausbildung eines 3/2-Wege-Druckreglers als Direktsteuerventil mit magnetischer Haltefunktion des Magnetankers in Zero-Flow-(ZF-)Ausführung angegeben werden, wobei im wesentlichen der radiale Dichtsitz zur Erfüllung einer verbesserten Dichtfunktion, nämlich Zero Flow bezüglich des Leckagestroms, vorgesehen ist.

Ferner sind der Doppelkolben, die Ankerstange, der Magnetanker, der Magnetkern und das Ventilgehäuse bezüglich ihrer axialen Längen derart aufeinander abgestimmt und die Befestigung des Doppelkolbens, des Ankers und der Ankerstange sind bezüglich des Magnetkerns derart gewählt, so dass in der Halteposition des Magnetankers der kleinste axiale Abstand zwischen dem Magnetkern und dem Magnetanker in dem Bereich von 0 bis ca. 0,3 mm liegt, bevorzugt ca. ≤ 0,1 mm beträgt. Bei diesem Abstand ist die Magnetkraft ausreichend erhöht gegenüber der Magnetkraft im Arbeitsbereich, so dass der Magnetanker und damit auch der Doppelkolben bei anliegendem hydraulischen Hauptdruck vorteilhafterweise in seiner Endposition gehalten wird.

Durch diese erfindungsgemäße Bauweise sowie die Magnetcharakteristik mit großen Magnetkräften bei geringen Luftspalten kann durch entsprechende Magnetauslegung ein Spulenstrom bzw. ein "Schnappstrom" eingestellt werden, bei welchem der Arbeitsbereich des Magneten überfahren und der Magnetanker im Bereich der hohen Magnetkraft gehalten wird. Durch die Verbindung des Magnetankers über die Ankerstange mit dem Steuerelement wird somit auch die Haltekraft des Steuerelements derart erhöht, so dass dieses auch bei anstehendem hydraulischen Hauptdruck von ca. 24 bar zuverlässig in seiner Halteposition verbleibt, da die hydraulische Kraft, welche in der einen Richtung auf das Steuerelement wirkt, kleiner ist als die ihr entgegenwirkende magnetische Kraft. Das Ventil ist ferner derart ausgebildet, so dass in der Halteposition vorteilhafterweise die Zulauföffnung zu dem Ventil und der Arbeitsanschluss zur Kupplung geöffnet sind und der hydraulische Hauptdruck in voller Höhe an der Kupplung anliegt. Daher kann mit dem erfindungsgemäßen Proportional-Druckregelventil sowohl das Druckreduzierventil als auch das Druckhalteventil vorteilhafterweise entfallen, da deren Funktionen von dem erfindungsgemäßen Ventil ersetzt werden. Weiterhin weist ein derartiger Regler vorteilhafterweise eine hohe Druck-/Spulenstrom-(pI-)Auflösung in seinem Feinregulierbereich zwischen 0 und ca. 12 bar auf. Ferner ermöglicht die erfindungsgemäße Haltefunktion vorteilhafterweise die Blockade schwingungsfähiger Massen in der Druckregelanordnung, wodurch eine erhöhte Schwingstabilität und geringerer mechanischer Verschleiß erzielt werden.

In einer Weiterbildung der Erfindung wird vorgeschlagen, dass das Steuerelement bzw. der Ventilschieber mit einer internen Druckrückführung zur Stabilisierung des Regelkreises der magnetischen und hydraulischen Kräfte versehen ist. Dies wird dadurch realisiert, dass der Doppelkolben eine Kolbenbohrung mit einem Dämpfungselement, beispielsweise einen Dämpfungskolben, aufweist, wodurch vorteilhafterweise eine zusätzliche Dämpfungsfunktion ermöglicht wird.

Alternativ zu der vorgenannten Realisierung des geringsten Abstandes zwischen dem Magnetkern und dem Magnetanker wird in einer besonders vorteilhaften Ausbildung der Erfindung eine Distanzscheibe aus einem unmagnetischen Werkstoff zwischen dem Magnetkern und dem Magnetanker angeordnet. Durch eine derartige Scheibe, welche ein "magnetisches Kleben" des Magnetankers an dem Magnetkern Verhindert, wird durch unterschiedliche Ausbildung der Scheibendicke vorteilhafterweise eine einfache Einstellbarkeit der Magnetkraft möglich. Alternativ zu der Distanzscheibe kann auch an dem Magnetkern und/oder dem Magnetanker eine unmagnetische Beschichtung zur Einhaltung des axialen Abstandes vogesehen sein.

In einer vorteilhaften Ausbildung des Druckregelventils beträgt die Distanz zwischen den beiden Stirnseiten des Magnetkerns und des Magnetankers ca. 0,01 bis 0,3 mm, bevorzugt jedoch ca. ≤ = 0,1 mm.

In einer alternativen Ausbildung des vorbeschriebenen Proportional-Magneten ist die Ankerstange axial verschiebbar in den Magnetanker eingesetzt und mittels einer Druckfeder vorgespannt.

Vorteilhafterweise weist die Druckfeder eine Federkraft auf, welche größer oder gleich der maximalen hydraulischen Regelkraft am Doppelkolben ist und somit über die Ankerstange der Federkraft entgegenwirkt.

In einer Weiterbildung wird vorgeschlagen, daß die Druckfeder eine möglichst niedrige Federrate aufweist, welche so bemessen ist, so daß schon bei einem geringen Spulenstrom der Magnetanker in den Bereich hoher Magnetkräfte bringbar ist und dadurch die Haltefunktion realisiert werden kann.

In einer besonderen Weiterbildung der Erfindung wird vorgeschlagen, daß die Ankerstange eine axiale Anschlagfläche aufweist, welche derart angeordnet ist, so daß, wenn sich der Anker im Proportional-Bereich des Magneten befindet, die Anschlagfläche die zum Magnetkern hingewandte Stirnseite des Magnetankers um einen definierten Abstand überragt. Damit wird vorteilhafterweise erreicht, daß der Magnetanker im Proportional-Bereich nicht in den Bereich hoher Magnetkräfte gerät, da die Ankerstange mit ihrer Anschlagfläche auf der Stirnseite des Magnetkerns zur Anlage kommt und die Stirnseiten vom Magnetanker und Magnetkern somit zueinander beabstandet bleiben. Die seriell mit der Ankerstange angeordnete Druckfeder ermöglicht somit einen "Durchschnappschutz" ohne Magnetkraftverlust, da die vorgespannte Feder die hydraulisch-magnetischen Kräfte überträgt, solange diese kleiner sind als die Vorspannkraft der Druckfeder. Kommt es dagegen in dem Druckregel- bzw. Proportional-Bereich des Magnetankers zu einem kritischen Betriebszustand, beispielsweise einem Hauptdruckeinbruch, so bewegt sich der Anker zunächst in Richtung auf den Magnetkern zu. Eine derartige Bewegung wird dann jedoch durch die Anschlagfläche der Ankerstange beendet, solange sich der Proportional-Magnet noch in seinem proportionalen Arbeitsbereich befindet und der Magnetanker bleibt zu dem Magnetkern beabstandet.

Um bei Bedarf kontrolliert in den Haltebereich zu gelangen, wird kurzfristig durch eine Erhöhung des Spulenstroms die Magnetkraft auf einen Wert größer als die maximal hydraulische Regelkraft erhöht. Dadurch wird das Federpaket weiter zusammengedrückt, bis die Stirnseite des Magnetankers über die Anschlagfläche der Ankerstange hinwegbewegbar und der Magnetanker somit in den magnetischen Haltebereich bringbar ist.

In einer weiteren Ausbildung der Erfindung wird vorgeschlagen, daß die Magnetspule mit einer elektrischen Steuereinrichtung verbunden ist, welche in vorgebbaren zeitlichen Abständen einen Stromimpuls an die Magnetspule zur Aufrechterhaltung der Halteposition des Magnetankers abgibt. Damit wird sichergestellt, daß der Magnetanker seine Halteposition relativ zum Magnetkern beibehält und nicht unbeabsichtigt aus der Halteposition "abfällt" und daß vorteilhafterweise das Steuerelement zuverlässig in seiner Halteposition verbleibt.

Als vorteilhaft hat sich herausgestellt, daß der Stromimpuls eine Stromstärke aufweist, welche einem Schnappstrom entspricht und größer ist als der Haltestrom der Magnetspule und beispielsweise ca. 950 mA beträgt und daß der Stromimpuls in zeitlichen Abständen von beispielsweise ca. 20 ms erfolgt. Die Ventilauslegung sollte idealerweise so erfolgen, daß bei unbeabsichtigtem Abfallen die Schaltelemente trotzdem geschlossen bleiben, d. h. z. B. der Regeldruck 12 bar bleibt.

Zum beabsichtigten Lösen des Magnetankers aus der Halteposition wird die Magnetspule mit einem elektrischen Ansteuersignal beaufschlagt, welches beispielsweise als Reduktion und anschließendes Hochfahren des Steuerstroms (Schleifenansteuerung) in der Magnetspule erfolgt. Damit kann auf einfache Weise ein Lösen des Ankers auf besonders elegante Art erfolgen.

Alternativ kann ein gewolltes Lösen des Magnetankers aus seiner Halteposition durch ein Drucksignal erfolgen, welches beispielsweise als eine Erhöhung des hydraulischen Hauptdrucks auf einen Wert oberhalb des Haltedrucks erfolgt und wobei die Druckerhöhung beispielsweise auf die Druckrückführung, insbesondere auf die Stirnseite der Kolbenbohrung, wirkt. Dadurch wird in vorteilhafter Weise durch eine Bewegung der Ankerstange ein Lösen des Magnetankers von dem Magnetkern erreicht.

Vorteilhafterweise wird das erfindungsgemäße Proportional-Druckregelventil als Direktsteuerventil verwendet. Dabei ist das Ventil bevorzugt als 3/2-Wege-Proportional-Druckregelventil mit einer magnetischen Haltefunktion des Magnetankers ausgebildet, so daß bei Verwendung des erfindungsgemäßen Ventils sowohl ein Druckreduzierventil als auch ein Druckhalteventil entfallen kann.

Weitere Ziele, Merkmale, Vorteile und Anwendungsmöglichkeiten der Erfindung ergeben sich aus der nachfolgenden Beschreibung der Ausführungsbeispiele, die in den Zeichnungen näher dargestellt sind. Dabei bilden alle beschriebenen und/oder bildlich dargestellten Merkmale für sich oder in beliebiger sinnvoller Kombination den Gegenstand der Erfindung, unabhängig von ihrer Zusammenfassung in den Ansprüchen und deren Rückbeziehung.
Es zeigen:
- Fig. 1: ein 3/2-Wege-Proportional-Druckregelventil als Direktsteuerventil mit magnetischer Haltefunktion des Magnetankers im Längsschnitt;
- Fig. 2: eine Kennlinie des Drucks p über dem Spulenstrom I für ein erfindungsgemäßes Ventil mit Haltefunktion in schematischer Darstellung;
- Fig. 3: eine Kennlinie des Drucks p und des Spulenstroms I über der Zeit t in schematischer Darstellung;
- Fig. 4: eine Kennlinie für den Verlauf des Drucks p und des Spulenstroms I über der Zeit t als Meßdiagramm;
- Fig. 5: eine Magnetkraft-Hubkennlinie bei einem Proportional-Magnet in schematischer Darstellung und
- Fig. 6: eine alternative Ausbildung eines Proportional-Magneten mit einer Druckfeder als Durchschnappschutz in Schnitt-Darstellung.

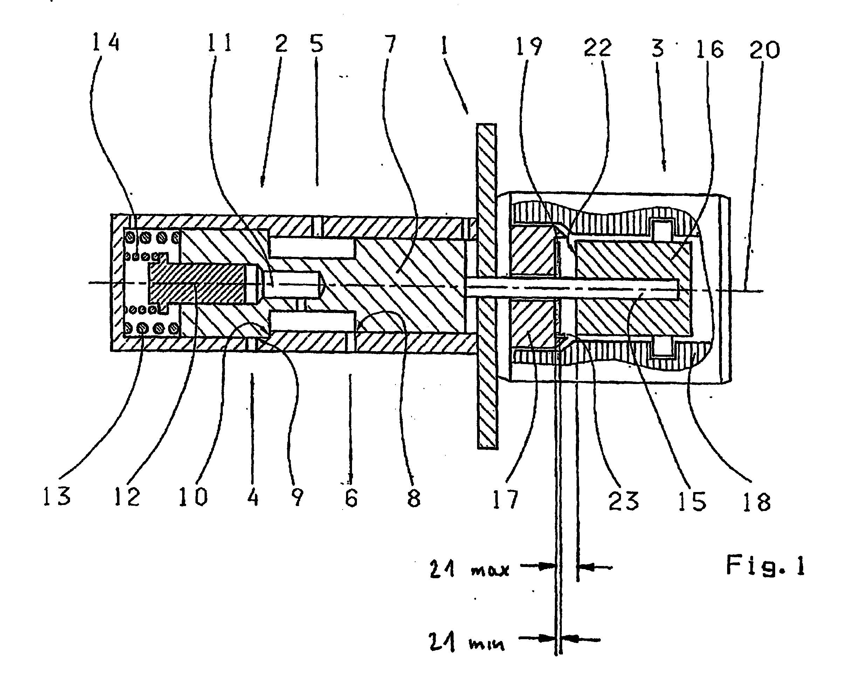

Das Druckregelventil 1 (Fig. 1) besteht im wesentlichen aus einem Ventilgehäuse 2 mit Zu- und Ablauföffnungen 4, 5, 6 und einem Proportional-Magnet 3. Ein Steuerelement 7 ist als Doppelkolben ausgebildet und zum Öffnen und Schließen der Steuerkanten 8, 9 und des Ventilsitzes 10 mit einer Ankerstange 15 verbunden, welche eine Ankerachse 20 aufweist und wobei die Ankerstange 15 in dem Magnetanker 16 befestigt ist. Der Magnetanker 16 bildet zusammen mit dem Magnetkern 17 und einer Magnetspule 18 den Proportional-Magnet 3.

Der Magnetanker 16 ist in seiner "oberen" Anschlagposition, d. h. in der zweiten Endstellung, dargestellt, so daß der Abstand 21 zwischen der Stirnseite 22 des Magnetankers 16 und der Stirnseite 23 des Magnetkerns 17 maximal ist. In dem Doppelkolben 7 ist an dem der Ankerstange 15 gegenüberliegenden Ende zur Druckrückführung eine Kolbenbohrung 11 vorgesehen, in welcher ein Dämpfungskolben 12 eingesetzt ist. Der Dämpfungskolben 12 wird über eine Druckfeder 14 und der Doppelkolben 7 über eine Druckfeder 13 beaufschlagt.

Der Doppelkolben 7 weist drei Dichtkanten auf, wobei die Dichtkanten 8 und 9 als Schieberkanten ausgebildet sind, welche im wesentlichen die Zu- und Ablauföffnungen 4 und 6 öffnen bzw. schließen. Eine weitere Dichtkante 10 ist als Dichtsitz mit einer bezüglich der Ankerachse 20 radial angeordneten Dichtfläche ausgebildet, welche bei geschlossener Zulauföffnung 4 eine Leckage des Ventils nahezu restlos verhindert; die dargestellte Ausbildung des Druckregelventils wird daher auch als Zero-Flow-(ZF-)Ausführung bezeichnet.

Durch Erhöhung des Spulenstroms wird der Magnetanker 16 auf den Magnetkern 17 hinbewegt. Damit wird gleichzeitig der Doppelkolben 7 gegen die Kraft der Druckfeder 13 nach unten bewegt, wodurch die Dichtkante 10 sich von ihrem Sitz löst, bis auch die Steuerkante 9 die Zulauföffnung 4 öffnet. In der erfindungsgemäßen Halteposition, welche der Einfachheit halber nicht gezeigt ist, sitzt der Magnetanker 16 auf der Distanzscheibe 19 auf, die Zulauföffnung 4 ist voll geöffnet und in der Kolbenbohrung 11 der Druckrückführung liegt der hydraulische Hauptdruck p an. Dieser Druck p wirkt über die "obere" Stirnfläche der Kolbenbohrung 11 der magnetischen Haltekraft des Ankers 16 entgegen.

Nach dem Lösen des Magnetankers 16 von dem Magnetkern 17, beispielsweise durch Reduzierung des Spulenstroms, schnappt der Anker 16 aus seiner Schaltstellung und bewegt sich in Richtung der in Fig. 1 gezeichneten Endstellung. Das Einfangen des Drucks, wie nachfolgend beschrieben, bevor die Endstellung, wie in Fig. 1 erreicht wird, ist für die Funktion wesentlich.

Ein Lösen des Magnetankers bzw. Doppelkolbens 7 aus seiner Halteposition kann andererseits auch dadurch erfolgen, daß der hydraulische Hauptdruck derart erhöht wird, so daß die Kraft, welche in der Kolbenbohrung 11 nach "oben" wirkt, größer wird als die ihr entgegenwirkende Magnetkraft des Proportional-Magneten 3.

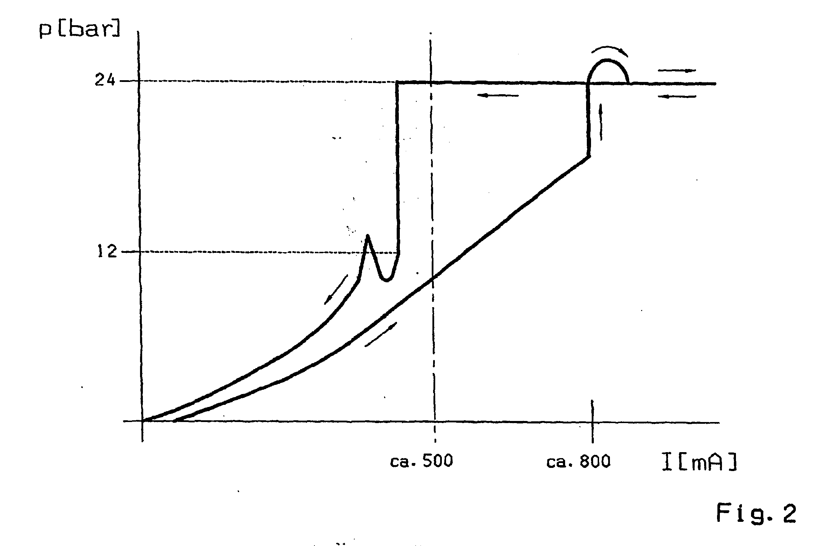

Durch eine Erhöhung des Spulenstroms I (Fig. 2) erfolgt zunächst eine im wesentlichen lineare Erhöhung des Regeldrucks p bis zum Erreichen eines "Schnappstroms" bei ca. 800 mA. Bei Erreichen dieses Wertes erfolgt dann ein Stufensprung des Druckverlaufs bei konstantem Strom auf den hydraulischen Hauptdruck von ca. 24 bar. Nach dem Erreichen dieses Hauptdrucks erfolgt außer einem "Überschwingen" auch bei weiterer Erhöhung des Spulenstroms keine weitere Druckveränderung.

Beim Zurücknehmen des Spulenstroms I auf einen Wert von ca. 500 mA bleibt der Systemdruck von ca. 24 bar zunächst konstant, erst nach dem Unterschreiten eines bestimmten Werts des Spulenstroms auf kleiner ca. 500 mA schnappt plötzlich der Magnetanker aus seiner Schaltstellung. Durch das gezielte Einfangen des Ventils führt der Regeldruck einen Drucksprung vom Systemdruck auf z. B. einen Zuhaltedruck von 12 bar aus. Bei weiterer Reduzierung des Spulenstroms I erfolgt eine im wesentlichen lineare Reduzierung des Systemdrucks p bis auf 0 bar.

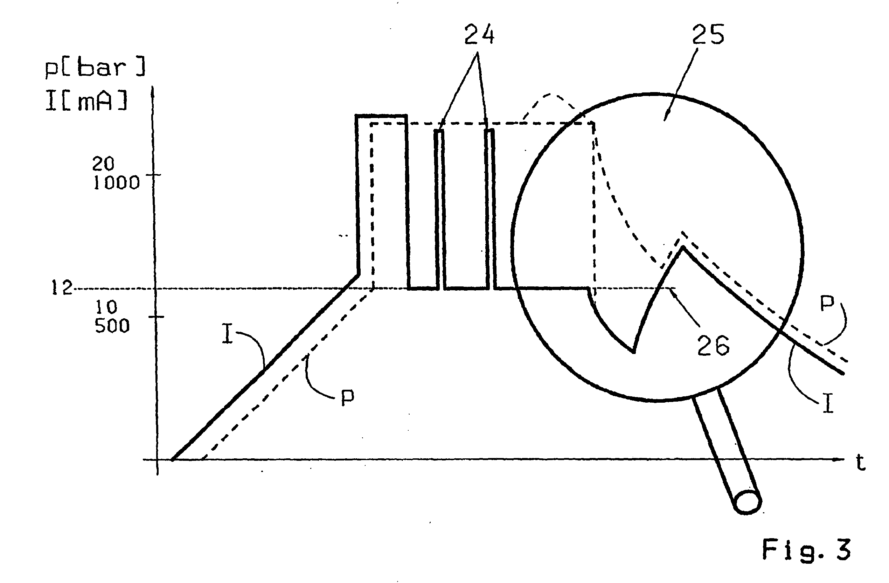

Durch eine lineare Erhöhung des Spulenstroms I (Fig. 3) erfolgt im wesentlichen zeitgleich eine lineare Erhöhung des Drucks p bis auf einen Wert von ca. 12 bar. Anschließend erfolgt ein sprungartiger Anstieg sowohl des Spulenstroms I als auch des Druckes p auf Werte von ca. 1 000 mA bzw. größer ca. 24 bar. Bis zum Erreichen des durch eine stilisierte Lupe dargestellten Verlaufs wird der Druck p auf dem Wert von ca. 24 bar konstant gehalten, während der Spulenstrom Stromimpulse, sogenannte Refresh-Peaks, zur Aufrechterhaltung der Haltefunktion aufweist, welche in kurzen zeitlichen Abständen von beispielsweise ca. 20 ms wiederholt werden.

In dem vergrößert dargestellten Zeitfenster, welches einem Zeitraum von ca. 50 ms entspricht, fällt zunächst der Strom I auf einen Wert kleiner 500 mA, wodurch auch der Druck p von seinem Maximalwert 24 bar absinkt. Durch eine anschließende Anhebung des Spulenstroms I wird der Verlauf des Drucks p oberhalb des Halteniveaus von ca. 12 bar jedoch wieder "eingefangen" (Schleifenansteuerung). Durch eine nachfolgende Reduzierung des Spulenstroms I erfolgt zeitgleich eine Reduzierung des Systemdrucks p.

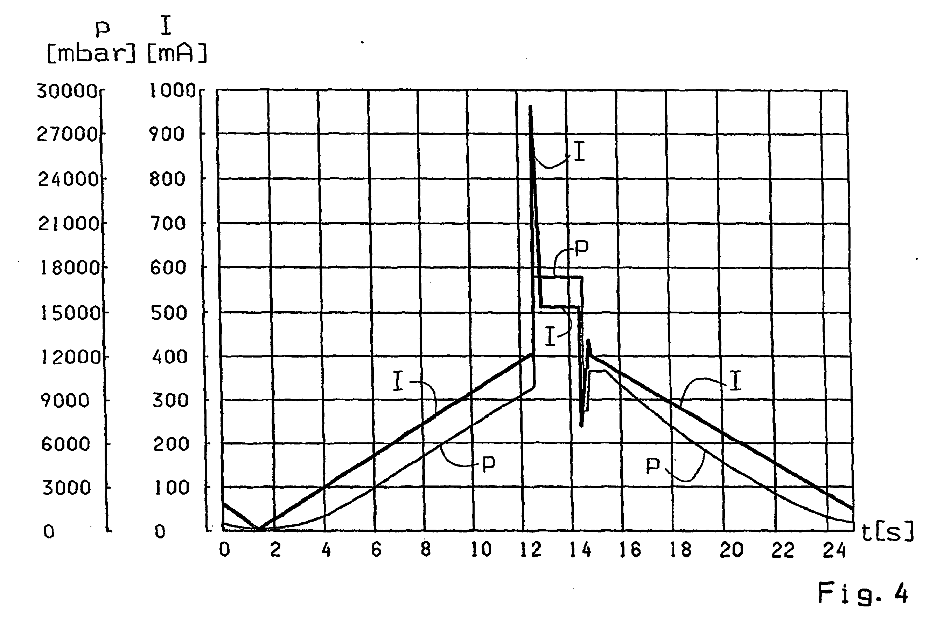

In der Kennlinie (Fig. 4), welche beispielhaft als Meßdiagramm aufgenommen wurde, erkennt man, daß der Druckverlauf p im wesentlichen parallel zu dem Verlauf des Spulenstroms I erfolgt. Dabei steigen während der ersten ca. 12 s zunächst beide Werte im wesentlichen linear an. Nach einer Druckspitze verbleiben sowohl der Druck als auch der Strom auf im wesentlichen konstanten Werten, bis nach ca. 15 s eine im wesentlichen lineare und parallele Reduzierung sowohl des Drucks als auch des Stroms erfolgt.

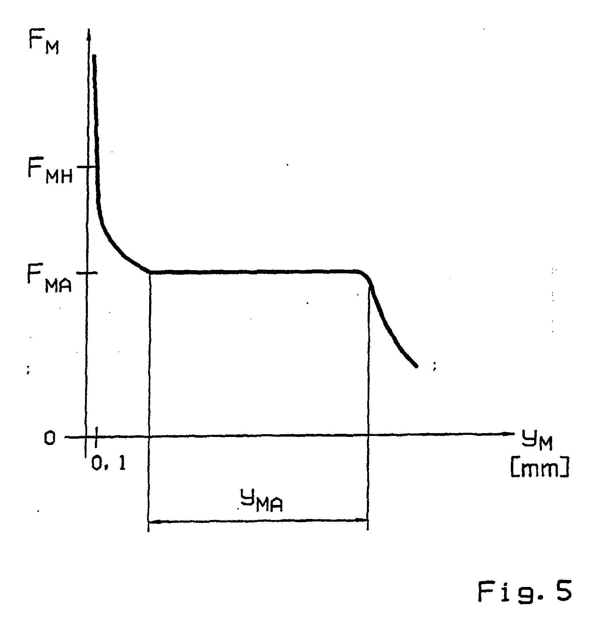

Wie eingangs bereits erwähnt, ist dem Stand der Technik (Fig. 5) zu entnehmen, daß ein Proportional-Magnet in seinem Arbeitsbereich Y_MA eine nahezu waagerechte Kraft-Hub-Kennlinie aufweist. In dem Arbeitsbereich Y_MA ist die Magnetkraft F_MA daher im wesentlichen konstant. Bei weiter zunehmendem Hub Y_M verringert sich die Magnetkraft F_M. Bei abnehmendem bzw. geringerem Hub Y_M erhöht sich die Magnetkraft F_M stark. Bei einem Hub Y_M von ca. 0,1 mm weist die Magnetkraft F_MH im Haltebereich einen signifikant höheren Wert auf als die Magnetkraft F_MA im Arbeitsbereich. Diese Tatsache macht sich die Erfindung zunutze, indem der Magnetanker des Proportional-Magneten durch eine Stromerhöhung der Magnetspule von dem Magnetkern angezogen wird und somit eine stabile Halteposition des Magnetankers erzeugt.

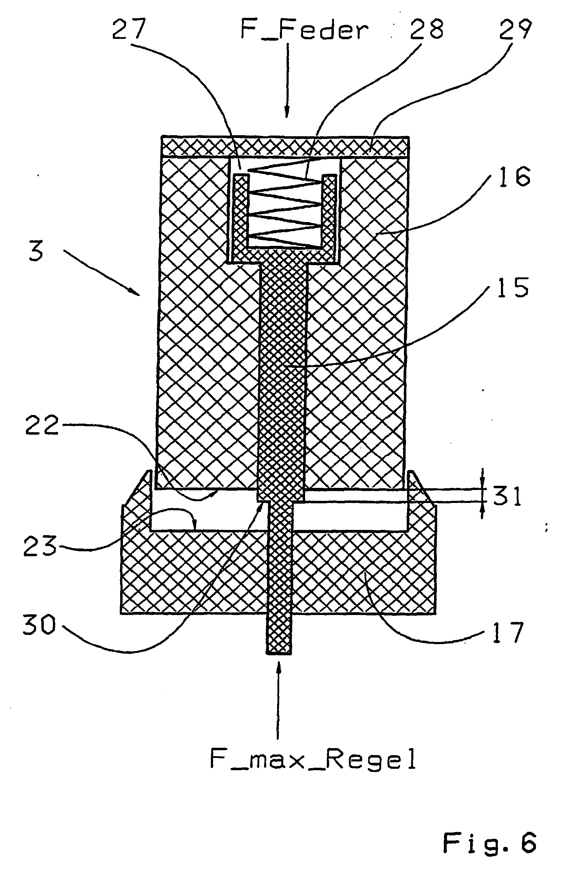

Alternativ zu der Ausbildung des Proportional-Magneten gemäß Fig. 1 ist in Fig. 6 ein Proportional-Magnet mit integrierter Haltefunktion sowie einem "Durchschnappschutz" dargestellt. (Gleiche Bauteile in den Figuren sind mit den gleichen Bezugszeichen gekennzeichnet.) Der Proportional-Magnet 3 mit Durchschnappschutz besteht im wesentlichen aus einem Magnetanker 16 mit einer stufenförmigen Bohrung 27, in die eine Ankerstange 15 mit unterschiedlichen Durchmesser-Bereichen eingesetzt ist. Diese Ankerstange 15 weist an ihrem, dem - der Einfachheit halber nicht dargestellten-Ventilteil abgewandten Ende einen topfförmigen Bereich auf, in den eine Druckfeder 28 eingesetzt ist. Diese Druckfeder wird mittels einer Verschlußscheibe 29 in dem Magnetanker 16 unter Vorspannung gehalten. Mittels der Druckfeder 28 wiederum wird eine Vorspannkraft auf die Ankerstange 15 in Richtung des hydraulischen Ventilteils aufgebracht.

Die Ankerstange 15 weist ferner eine ringförmige Anschlagfläche 30 auf, welche derart angeordnet ist, so daß, solange sich der Magnetanker im Proportional-Bereich befindet, diese Anschlagfläche 30 einen Abstand 31 gegenüber der Stirnseite 22 des Ankers 16 aufweist und diesen um den Abstand 31 überragt. Bei elektrischer Ansteuerung taucht der Magnetanker 16 in den Magnetkern 17 ein, bis die Anschlagfläche 30 auf der Stirnseite 23 des Kerns 17 zur Anlage kommt. Die vorgespannte Feder 18 überträgt somit die hydraulisch-magnetischen Kräfte, solange diese kleiner sind als die Vorspannkraft der Feder 28. Kommt es dagegen in dem Druckregel- bzw. Proportional-Bereich des Magneten zu einem kritischen Betriebszustand, beispielsweise zu einem hydraulischen Hauptdruckeinbruch, und der Anker 16 bewegt sich in Richtung auf den Magnetkern 17 zu, so wird diese Bewegung durch den Anschlag 30 im Abstand 31 beendet. Der Proportional-Magnet befindet sich vorteilhafterweise noch immer in seinem proportionalen Arbeitsbereich. Ein derart ausgebildeter Proportional-Magnet ermöglicht somit einen "Durchschnappschutz" ohne Magnetkraftverlust.

Um den Magnetanker 16 im Betrieb dennoch in die Halteposition zu bewegen, wird kurzzeitig durch eine Erhöhung des Spulenstroms eine Magnetkraft erzeugt, welche oberhalb der maximalen, hydraulischen Regelkraft F_max_Regel liegt, um so die Druckfeder 28 weiter zusammenzudrücken und den Magnetanker 16 über die Anschlagfläche 30 hinwegzubewegen und den Anker 16 in den magnetischen Haltebereich des Magnetkerns 17 zu bringen.

### Bezugszeichen

- 1: Druckregelventil
- 2: Ventilgehäuse
- 3: Proportional-Magnet
- 4: Zulauföffnung
- 5: Arbeitsanschluß
- 6: Ablauföffnung
- 7: Steuerelement, Doppelkolben
- 8: Steuerkante
- 9: Steuerkante
- 10: Ventilsitz, radial
- 11: Kolbenbohrung
- 12: Dämpfungskolben
- 13: Druckfeder
- 14: Druckfeder
- 15: Ankerstange
- 16: Magnetanker
- 17: Magnetkern
- 18: Magnetspule
- 19: Distanzscheibe
- 20: Ankerachse
- 21: Abstand
- 22: Stirnseite, Anker
- 23: Stirnseite, Kern
- 24: Stromimpuls
- 25: Zeitfenster
- 26: Halteniveau
- 27: Bohrung
- 28: Druckfeder
- 29: Verschlußscheibe
- 30: Anschlagfläche
- 31: Abstand
- F_M: Magnetkraft
- F_MH: Magnetkraft Haltebereich
- F_MA: Magnetkraft Arbeitsbereich
- F_Feder: Federkraft
- F_max_Regel: maximal hydraulische Regelkraft
- Y_M: Magnethub
- Y_MA: Arbeitsbereich
- p: Druck
- I: Strom
- Q: Durchfluß
- C: Federrate

## Patentansprüche

1. Proportional-Druckregelventil mit
- einem Ventilgehäuse (2) mit Zu- und Ablauföffnungen (4, 5, 6),
- einem Steuerelement (7) mit Steuerkanten (8, 9) zum Öffnen und Schließen von Drosselspalten (4, 6),
- einer Ankerstange (15) mit einer Ankerachse (20) zur Verbindung des Steuerelements (7) mit
- einem Proportional-Magnet (3), welcher Bestandteil des Proportional-Druckregelventils ist und aus einem Magnetkern (17), einem Magnetanker (16) und einer Magnetspule (18) besteht, wobei der Magnetanker (16) in Richtung der Ankerachse (20) zwischen zwei Endpositionen hin- und herbewegbar ist und die erste Endposition einer Halteposition des Magnetankers (16) entspricht und in der Halteposition der kleinste axiale Abstand (21) zwischen den beiden gegenüber angeordneten Stirnseiten (22, 23) des Magnetankers (16) und des Magnetkerns (17) vorliegt, und der Proportional-Magnet (3) in seinem Arbeitsbereich (YMA) eine nahezu konstante Magnetkraft (F_MA) aufweist,
- dass in der Halteposition des Magnetankers die magnetische Haltekraft (F_MH) zwischen dem Magnetanker (16) und dem Magnetkern (17) größer ist als die Magnetkraft (F_MA) im Arbeitsbereich (Y_MA) des Proportional-Magneten (3) und
- der Magnetanker (16) durch die magnetische Haltekraft (F_MH) in dieser Halteposition feststellbar ist,
**dadurch gekennzeichnet, dass** das Steuerelement (7) drei Steuerkanten bzw. Steuerflächen aufweist und als Doppelkolben mit zwei Schieberkanten (8, 9) und einem weiteren Dichtsitz (10) ausgebildet ist, wobei sich die Dichtfläche des Dichtsitzes (10) im wesentlichen in radialer Richtung bezüglich der Längsachse des Steuerelements (7) erstreckt, und die axialen Längen des Doppelkolbens (7), der Ankerstange (15), des Magnetankers (16), des Magnetkerns (17) und des Ventilgehäuses (2) derart bemessen sind, so dass in der ersten Endposition, welche der Halteposition entspricht, der axiale Abstand (21) zwischen dem Magnetanker (16) und dem Magnetkern (17) in dem Bereich von 0 bis ca. 0,3 mm liegt, bevorzugt ca. ≤ 0,1 mm beträgt.

2. Proportional-Druckregelventil nach Anspruch 1, **dadurch gekennzeichnet, dass** der Doppelkolben (7) eine interne Druckrückführung zur Stabilisierung des Regelkreises der magnetischen und hydraulischen Kräfte aufweist, welche beispielsweise als eine Kolbenbohrung (11) mit einem Dämpfungskolben (12) ausgebildet ist.

3. Proportional-Druckregelventil nach einem der Ansprüche 1 bis 2, **dadurch gekennzeichnet, dass** zwischen dem Magnetkern (17) und dem Magnetanker (16) eine Distanzscheibe (19) aus einem unmagnetischen Werkstoff oder an dem Magnetkern (17) und /oder dem Magnetanker (16) eine unmagnetische Beschichtung zur Einhaltung eines axialen Abstandes (21) vorgesehen ist.

4. Proportional-Druckregelventil nach Anspruch 3, **dadurch gekennzeichnet, dass** die Distanz zwischen den Stirnseiten des Magnetkerns (17) und des Magnetankers (16) ca. 0,01 bis 0,3 mm, bevorzugt jedoch ca. ≤ 0,1 mm, beträgt.

5. Proportional-Druckregelventil nach einem der vorangehenden Ansprüche, **dadurch gekennzeichnet, dass** die Ankerstange (15) axial verschiebbar in den Magnetanker (16) eingesetzt und mittels einer Druckfeder (28) vorgespannt ist.

6. Proportional-Druckregelventil nach Anspruch 5, **dadurch gekennzeichnet, dass** die Druckfeder (28) eine Federkraft (F_Feder) aufweist, welche größer oder gleich der maximalen hydraulischen Regelkraft (F_max_Regel) am Doppelkolben (7) ist.

7. Proportional-Druckregelventil nach Anspruch 5 oder 6, **dadurch gekennzeichnet, dass** die Druckfeder (28) eine möglichst niedrige Federrate (C) aufweist, die so bemessen ist, so dass schon bei einem geringen Spulenstrom (I) der Magnetanker (16) in den Bereich hoher Magnetkräfte (F_MH) bringbar und **dadurch** die Haltefunktion realisierbar ist.

8. Proportional-Druckregelventil nach Anspruch 5,6 oder 7, **dadurch ge kennzeichnet, dass** die Ankerstange (15) eine axiale Anschlagfläche (30) aufweist, welche derart angeordnet ist, so dass im Proportional-Bereich des Magneten (3) die Anschlagfläche (30) die zum Magnetkern (17) hingewandte Stirnseite (22) des Magnetankers (16) um einen Abstand (31) überragt, damit der Magnetanker (16) im Proportional-Bereich nicht in den Bereich hoher Magnetkräfte (F_MH) gerät.

9. Proportional-Druckregelventil nach Anspruch 8, **dadurch gekennzeichnet, dass** die Magnetkraft (F_M) durch eine Erhöhung des Spulenstroms (I) auf einen Wert (F_MH) größer als die maximale, hydraulische Regelkraft (F_max_Regei) erhöht wird, so dass die Federkraft (F_Feder) der Druckfeder (28) überwunden wird und die Stirnseite (22) des Magnetankers (16) über die Anschlagfläche (30) hinwegbewegbar und der Magnetanker (16) somit in den magnetischen Haltebereich bringbar ist.

10. Proportional-Druckregelventil nach einem der vorangehenden Ansprüche, **dadurch gekennzeichnet, dass** die Magnetspule (18) mit einer elektrischen Steuereinrichtung verbunden ist, welche in vorgebbaren zeitlichen Abständen einen Stromimpuls an die Magnetspule (18) zur Aufrechterhaltung der Halteposition des Magnetankers (16) abgibt.

11. Proportional-Druckregelventil nach Anspruch 5, **dadurch gekennzeichnet, dass** der Stromimpuls eine Stromstärke aufweist, welche einem Schnappstrom entspricht und beispielsweise ca. 950 mA beträgt, und dass der Stromimpuls in zeitlichen Abständen von beispielsweise ca. 20 ms erfolgt.

12. Proportional-Druckregelventil nach einem der vorangehenden Ansprüche, **dadurch gekennzeichnet, dass** zum Lösen des Magnetankers (16) aus der Halteposition die Magnetspule (18) ein elektrisches Ansteuersignal erhält, welches beispielsweise als Schleifenansteuerung durch Reduktion und anschließendes Hochfahren des Steuerstroms der Magnetspule (18) erfolgt.

13. Proportional-Druckregelventil nach einem der Ansprüche 1 bis 11, **dadurch gekennzeichnet, dass** zum Lösen des Magnetankers (18) aus der Halteposition ein Drucksignal erfolgt, welches beispielsweise als eine Erhöhung des hydraulischen Hauptdrucks auf einen Wert oberhalb des Haltedrucks erfolgt, und die Druckerhöhung insbesondere auf die Stirnfläche der Kolbenbohrung (11) wirkt.

14. Verwendung eines Proportional-Druckregelventils nach einem der vorangehenden Ansprüche als Direktsteuerventil.

## Claims

1. A proportional pressure-regulating valve with
- a valve casing (2) with inlet and outlet openings (4, 5, 6),
- a control element (7) with control edges (8, 9) for opening and closing throttle gaps (4, 6),
- an armature rod (15) with an armature axis (20) for connecting the control element (7) to
- a proportional magnet (3) which is a component of the proportional pressure-regulating valve and consists of a magnetic core (17), a magnet armature (16) and a magnet coil (18), wherein the magnet armature (16) is capable of being moved back and forth in the direction of the armature axis (20) between two end positions and the first end position corresponds to a holding position of the magnet armature (16) and in the holding position the smallest axial spacing (21) exists between the two oppositely arranged end faces (22, 23) of the magnet armature (16) and of the magnetic core (17), and the proportional magnet (3) exhibits an almost constant magnetic force (F_MA) within its working range (Y_MA),
- wherein in the holding position of the magnet armature the magnetic holding force (F_MH) between the magnet armature (16) and the magnetic core (17) is greater than the magnetic force (F_MA) within the working range (Y_MA) of the proportional magnet (3) and
- the magnet armature (16) is capable of being fixed in this holding position by the magnetic holding force (F_MH),
**characterised in that** the control element (7) has three control edges or control surfaces and takes the form of a double piston with two slide edges (8, 9) and one further sealing seat (10), the sealing surface of the sealing seat (10) extending substantially in the radial direction with respect to the longitudinal axis of the control element (7), and the axial lengths of the double piston (7), of the armature rod (15), of the magnet armature (16), of the magnetic core (17) and of the valve casing (2) are dimensioned such that in the first end position, which corresponds to the holding position, the axial spacing (21) between the magnet armature (16) and the magnetic core (17) lies within the range from 0 mm to about 0.3 mm and preferably amounts to about ≤ 0.1 mm.

2. Proportional pressure-regulating valve according to Claim 1, **characterised in that** for the purpose of stabilising the control loop of the magnetic and hydraulic forces the double piston (7) exhibits an internal pressure feedback which, for example, takes the form of a piston bore (11) with a damping piston (12).

3. Proportional pressure-regulating valve according to Claim 1 or 2, **characterised in that** for the purpose of maintaining an axial spacing (21) a shim (19) made of a non-magnetic material is provided between the magnetic core (17) and the magnet armature (16) or a non-magnetic coating is provided on the magnetic core (17) and/or on the magnet armature (16).

4. Proportional pressure-regulating valve according to Claim 3, **characterised in that** the distance between the end faces of the magnetic core (17) and of the magnet armature (16) amounts to about 0.01 mm to 0.3 mm, but preferably to about ≤ 0.1 mm.

5. Proportional pressure-regulating valve according to one of the preceding claims, **characterised in that** the armature rod (15) is inserted into the magnet armature (16) in axially displaceable manner and is prestressed by means of a compression spring (28).

6. Proportional pressure-regulating valve according to Claim 5, **characterised in that** the compression spring (28) exhibits a spring force (F_Feder) that is greater than or equal to the maximum hydraulic control force (F_max_Regel) on the double piston (7).

7. Proportional pressure-regulating valve according to Claim 5 or 6, **characterised in that** the compression spring (28) exhibits a spring rate (C) which is as low as possible and which is dimensioned such that already in the event of a small coil current (I) the magnet armature (16) is capable of being brought into the range of high magnetic forces (F_MH) and as a result the holding function can be realised.

8. Proportional pressure-regulating valve according to Claim 5, 6 or 7, **characterised in that** the armature rod (15) has an axial stop face (30) which is arranged in such a manner that within the proportional range of the magnet (3) the stop face (30) projects by a spacing (31) beyond the end face (22) of the magnet armature (16) facing towards the magnetic core (17), in order that within the proportional range the magnet armature (16) does not come into the range of high magnetic forces (F_MH).

9. Proportional pressure-regulating valve according to Claim 8, **characterised in that** by virtue of an increase in the coil current (I) the magnetic force (F_M) is increased to a value (F_MH) greater than the maximum hydraulic control force (F_max_Regel), so that the spring force (F_Feder) of the compression spring (28) is overcome and the end face (22) of the magnet armature (16) is capable of being moved beyond the stop face (30) and the magnet armature (16) is consequently capable of being brought into the magnetic holding range.

10. Proportional pressure-regulating valve according to one of the preceding claims, **characterised in that** the magnet coil (18) is connected to an electrical control device which at predeterminable temporal intervals emits a current pulse to the magnet coil (18) for the purpose of maintaining the holding position of the magnet armature (16).

11. Proportional pressure-regulating valve according to Claim 5, **characterised in that** the current pulse exhibits a current intensity that corresponds to a snap current and amounts, for example, to about 950 mA, and **in that** the current pulse occurs at temporal intervals of, for example, about 20 ms.

12. Proportional pressure-regulating valve according to one of the preceding claims, **characterised in that** with a view to releasing the magnet armature (16) from the holding position the magnet coil (18) receives an electrical select signal which, for example, is effected in the form of a loop drive by reduction and subsequent raising of the control current of the magnet coil (18).

13. Proportional pressure-regulating valve according to one of Claims 1 to 11, **characterised in that** with a view to releasing the magnet armature (16) from the holding position a pressure signal is effected which, for example, is effected in the form of an increase in the hydraulic main pressure to a value above the holding pressure, and the increase in pressure acts, in particular, on the end face of the piston bore (11).

14. Use of a proportional pressure-regulating valve according to one of the preceding claims as a direct control valve.

## Revendications

1. Soupape proportionnelle de régulation de la pression, comprenant :
- un boîtier de soupape (2) avec des ouvertures d'entrée et de sortie (4, 5, 6),
- un élément de commande (7) avec des arêtes de commande (8, 9) pour ouvrir et fermer des fentes d'étranglement (4, 6),
- une tige d'ancrage (15) avec un axe d'ancrage (20) pour connecter l'élément de commande (7) à
- un aimant proportionnel (3), qui fait partie de la soupape proportionnelle de régulation de la pression et qui se compose d'un noyau magnétique (17), d'une armature magnétique (16) et d'une bobine magnétique (18), l'armature magnétique (16) pouvant se déplacer suivant un mouvement alternatif entre deux positions d'extrémité dans la direction de l'axe d'ancrage (20) et la première position d'extrémité correspondant à une position de retenue de l'armature magnétique (16) et dans la position de retenue, la distance axiale (21) entre les deux côtés frontaux (22, 23) disposés en regard l'un de l'autre de l'armature magnétique (16) et du noyau magnétique (17) étant la plus petite, et l'aimant proportionnel (3) présentant dans sa zone de travail (Y_MA) une force magnétique pratiquement constante (F_MA),
- la force de retenue magnétique (F_MH) entre l'armature magnétique (16) et le noyau magnétique (17) dans la position de retenue de l'armature magnétique étant supérieure à la force magnétique (F_MA) dans la zone de travail (Y_MA) de l'aimant proportionnel (3) et
- l'armature magnétique (16) pouvant être fixée par la force de retenue magnétique (F_MH) dans cette position de retenue,
**caractérisée en ce que** l'élément de commande (7) présente trois arêtes de commande ou surfaces de commande, et est réalisé sous forme de double piston avec deux arêtes de coulisseau (8, 9) et un siège d'étanchéité supplémentaire (10), la surface d'étanchéité du siège d'étanchéité (10) s'étendant essentiellement dans la direction radiale par rapport à l'axe longitudinal de l'élément de commande (7) et les longueurs axiales du double piston (7), de la tige d'ancrage (15), de l'armature magnétique (16), du noyau magnétique (17), et du boîtier de soupape (2) étant dimensionnées de telle sorte que dans la première position d'extrémité, qui correspond à la position de retenue, la distance axiale (21) entre l'armature magnétique (16) et le noyau magnétique (17) se situe dans la plage de 0 à environ 0,3 mm, de préférence soit environ ≤ 0,1 mm.

2. Soupape proportionnelle de régulation de la pression selon la revendication 1, **caractérisée en ce que** le double piston (7) présente un retour de pression interne pour stabiliser le circuit de régulation des forces magnétiques et hydrauliques, qui est réalisé par exemple sous forme d'alésage de piston (11) avec un piston d'amortissement (12).

3. Soupape proportionnelle de régulation de la pression selon l'une quelconque des revendications 1 à 2, **caractérisée en ce que** l'on prévoit entre le noyau magnétique (17) et l'armature magnétique (16) une rondelle d'espacement (19) en matériau non magnétique, ou sur le noyau magnétique (17) et/ou l'armature magnétique (16), un revêtement non magnétique pour maintenir une distance axiale (21).

4. Soupape proportionnelle de régulation de la pression selon la revendication 3, **caractérisée en ce que** la distance entre les côtés frontaux du noyau magnétique (17) et de l'armature magnétique (16) vaut environ 0,01 à 0,3 mm, de préférence toutefois est environ ≤ 0,1 mm.

5. Soupape proportionnelle de régulation de la pression selon l'une quelconque des revendications précédentes, **caractérisée en ce que** la tige d'ancrage (15) est insérée de manière déplaçable dans l'armature magnétique (16) et est précontrainte au moyen d'un ressort de pression (28).

6. Soupape proportionnelle de régulation de la pression selon la revendication 5, **caractérisée en ce que** le ressort de pression (28) présente une force de ressort (F_Feder) qui est supérieure ou égale à la force de régulation maximale hydraulique (F_max_Regel) au niveau du double piston (7).

7. Soupape proportionnelle de régulation de la pression selon la revendication 5 ou 6, **caractérisée en ce que** le ressort de pression (28) présente une caractéristique de ressort aussi faible que possible (C), qui est dimensionnée de telle sorte que déjà pour un faible courant de bobine (I), l'armature magnétique (16) puisse être amenée dans la plage des grandes forces magnétiques (F_MH) et que la fonction de retenue puisse ainsi être réalisée.

8. Soupape proportionnelle de régulation de la pression selon les revendications 5, 6, ou 7, **caractérisée en ce que** la tige d'ancrage (15) présente une surface de butée axiale (30) qui est disposée de telle sorte que dans la plage proportionnelle de l'aimant (3), la surface de butée (30) dépasse du côté frontal (22) de l'armature magnétique (16) tourné vers le noyau magnétique (17), d'une distance (31), afin que l'armature magnétique (16), dans la plage proportionnelle, ne parvienne pas dans la plage des grandes forces magnétiques (F_MH).

9. Soupape proportionnelle de régulation de la pression selon la revendication 8, **caractérisée en ce que** la force magnétique (F_M) est augmentée par une augmentation du courant de bobine (I) à une valeur (F_MH) qui est supérieure à la force de régulation hydraulique maximale (F_max_Regel), de telle sorte que la force de ressort (F_Feder) du ressort de pression (28) soit surmontée et que le côté frontal (22) de l'armature magnétique (16) puisse être déplacé au-delà de la surface de butée (30) et que l'armature magnétique (16) puisse ainsi être amenée dans la plage de retenue magnétique.

10. Soupape proportionnelle de régulation de la pression selon l'une quelconque des revendications précédentes, **caractérisée en ce que** la bobine magnétique (18) est connectée à un dispositif de commande électrique qui délivre, à intervalles de temps prédéfinissables, une impulsion de courant à la bobine magnétique (18) pour maintenir la position de retenue de l'armature magnétique (16).

11. Soupape proportionnelle de régulation de la pression selon la revendication 5, **caractérisée en ce que** l'impulsion de courant présente une intensité de courant qui correspond à un courant d'encliquetage et vaut par exemple environ 950 mA, et **en ce que** l'impulsion de courant a lieu à intervalles de temps d'environ 20 ms, par exemple.

12. Soupape proportionnelle de régulation de la pression selon l'une quelconque des revendications précédentes, **caractérisée en ce que** pour libérer l'armature magnétique (16) de la position de retenue, la bobine magnétique (18) reçoit un signal de commande électrique qui est produit par exemple en tant que commande en boucle par réduction et augmentation subséquente du courant de commande de la bobine magnétique (18).

13. Soupape proportionnelle de régulation de la pression selon l'une quelconque des revendications 1 à 11, **caractérisée en ce que** pour libérer l'armature magnétique (16) de la position de retenue, on produit un signal de pression qui se produit par exemple sous forme d'augmentation de la pression hydraulique principale à une valeur au-dessus de la pression de retenue, et l'augmentation de pression agit notamment sur la surface frontale de l'alésage du piston (11).

14. Utilisation d'une soupape proportionnelle de régulation de la pression selon l'une quelconque des revendications précédentes, en tant que soupape de commande directe.
